# FASCICULE DE BREVET EUROPEEN

(11) **EP 1 931 091 B1**
(45) Date de publication et mention de la délivrance du brevet: **25.08.2010**
(21) Numéro de dépôt: 07291423.7
(22) Date de dépôt: 29.11.2007
(51) Int. Cl.: H04L 12/58

(54) **Procédé pour transmettre un contenu vers au moins un destinataire à l'aide d'un équipement mobile**
Verfahren zum Übertragen eines Inhalts an mindestens einen Empfänger mit Hilfe eines Mobilgeräts
Method for sending content to at least one recipient using a mobile device

(30) Priorité: 06.12.2006 FR 0655341
(43) Date de publication de la demande: 11.06.2008
(73) Titulaire: Miyowa, 75001 Paris (FR)
(72) Inventeur: Colon, François, 113013 Marseille (FR)
(74) Mandataire: Novagraaf Technologies

(56) Documents cités:
- EP-A- 1 643 744
- US-A1- 2006 218 234

## Description

L'invention se rapporte à un procédé pour transmettre un contenu depuis un équipement mobile d'émission d'un émetteur vers au moins un équipement mobile de réception associé à au moins un destinataire respectif.

Dans l'état de la technique, il est connu par exemple de transmettre un contenu en tant que pièce jointe d'une pluralité de SMS depuis un équipement mobile. Toutefois, un tel procédé est fastidieux puisqu'il nécessite que l'émetteur désirant transmettre le contenu envoi plusieurs SMS, à la pluralité de destinataires. Il est pourtant important qu'un procédé de transmission de contenu soit simple pour l'émetteur.

On connaît également dans l'état de la technique, le fait de mettre à disposition du public un contenu par l'intermédiaire d'une page personnelle accessible sur le réseau internet. De tels pages Internet personnelles peuvent également être appelées « blogs » en langue anglaise. Toutefois, un équipement mobile standard ne possède pas nécessairement les fonctionnalités pour générer de telles pages personnelles. Par ailleurs, dans un tel procédé, l'émetteur du contenu ne peut pas contrôler facilement qui est autorisé à visualiser le contenu ou non. En particulier, l'émetteur ne peut pas sélectionner des destinataires particuliers du contenu. Par ailleurs, l'émetteur du contenu n'a pas de moyen simple d'avertir immédiatement les destinataires de la présence d'un nouveau contenu.

Le document de l'art antérieur EP 1 643 744 divulge un procédé pour transmettre contenu où l'équipement mobile d'émission transmet un message avec du contenu et une liste de destinataires à un serveur, et le serveur ensuite notifie aux destinataires l'adresse d'une page construite avec ledit contenu envoyé. Cependant, le document EP 1 643 744 ne propose aucun mécanisme pour faciliter la sélection des destinataires à l'émetteur.

L'invention vise à pallier les inconvénients précités.

En particulier, un des problèmes résolus par l'invention est de fournir un procédé tel que précédemment décrit, qui soit simple pour l'émetteur du contenu.

Un autre problème résolu par l'invention est de fournir un procédé tel que précédemment décrit, qui permette une sélection par l'émetteur du contenu, des destinataires du contenu.

Un autre problème résolu par l'invention est de fournir un procédé tel que précédemment décrit, qui puisse être mis en oeuvre depuis un équipement mobile standard.

Au moins un de ces problèmes est résolu par l'invention qui se rapporte à un procédé pour transmettre un contenu depuis un équipement mobile d'émission d'un émetteur vers au moins un équipement de réception associé à un destinataire respectif, caractérisé en ce qu'il comprend des étapes dans lesquelles :
- Ledit équipement mobile d'émission transmet ledit contenu à un serveur de stockage;
- Ledit serveur de stockage stocke ledit contenu en lui associant un identifiant de contenu ;
- Ledit serveur de stockage construit une page de contenu comprenant ledit contenu, ladite page de contenu étant associée à une première adresse, ladite première adresse étant fonction au moins dudit identifiant de contenu ;
- Ledit serveur de stockage transmet audit équipement mobile d'émission, en réponse à la réception dudit contenu, un premier message comprenant une deuxième adresse associée à une page de sélection de destinataires;
- Ledit équipement mobile d'émission accède à ladite page de sélection de destinataires par l'intermédiaire de ladite deuxième adresse;
- Ledit émetteur construit, par l'intermédiaire de ladite page de sélection de destinataires, une liste comprenant un identifiant dudit équipement de réception ;
- Ledit serveur transmet, vers ledit équipement de réception, un deuxième message comprenant au moins ladite première adresse ;
- Ledit destinataire accède à ladite page de contenu par l'intermédiaire de ladite première adresse.

Grâce à ce procédé, au moins un destinataire privilégié du contenu sont facilement sélectionnés par l'émetteur par l'intermédiaire de la page de sélection de destinataires. En outre, selon l'invention, l'émetteur n'envoi qu'une fois le contenu vers le serveur.

Le procédé précédemment décrit a en outre l'avantage que des pages de contenu, notamment des pages wap, sont ouvertes par l'utilisateur et au moins un destinataire, ce qui est avantageux pour un opérateur du réseau sur lequel transite des données échangées selon l'invention. II est en effet désirable pour ces opérateurs que des contenus soient transmis en augmentant le nombre d'ouverture de pages lors du procédé de transmission.

Selon l'invention, on comprend également que l'équipement émetteur et les équipements destinataires ont seulement besoin de fonctionnalités de type navigation pour pouvoir ouvrir notamment les pages de contenu, ce qui est standard par exemple pour les téléphones mobiles vendus actuellement.

En outre, afin de simplifier les échanges entre le serveur et l'émetteur, dans le procédé susmentionné, ledit équipement mobile transmet ledit contenu au serveur de stockage dans un message MMS, et ledit serveur de stockage transmet audit équipement mobile d'émission ledit premier message dans un message SMS comprenant ladite deuxième adresse sous la forme d'un premier lien wap push, et ledit équipement d'émission accède à ladite page de sélection de destinataires en activant ledit premier lien wap push, de sorte à ouvrir un navigateur wap de l'équipement d'émission.

De la même façon, afin de simplifier les échanges entre le serveur et le destinataire, dans le procédé susmentionné, ledit serveur transmet, vers ledit équipement de réception, le deuxième message dans un message SMS comprenant ladite deuxième adresse sous la forme d'un deuxième lien wap push et équipement de réception accède à ladite page de contenu à l'aide de ladite deuxième adresse en activant ledit deuxième lien wap push, de sorte à ouvrir un navigateur wap de l'équipement de réception.

Le contenu peut éventuellement être transmis à une pluralité d'équipements de réception associés à une pluralité de destinataires.

On décrit maintenant un mode de réalisation de l'invention en référence aux figures annexées dans lesquelles :
- FIG. 1 est un schéma illustrant le procédé selon un mode de réalisation de l'invention ;
- FIG. 2 illustre une page de sélection de destinataires générée par un serveur selon un mode de réalisation de l'invention ;
- FIG. 3 illustre une page de contenu générée par un serveur selon un mode de réalisation de l'invention.

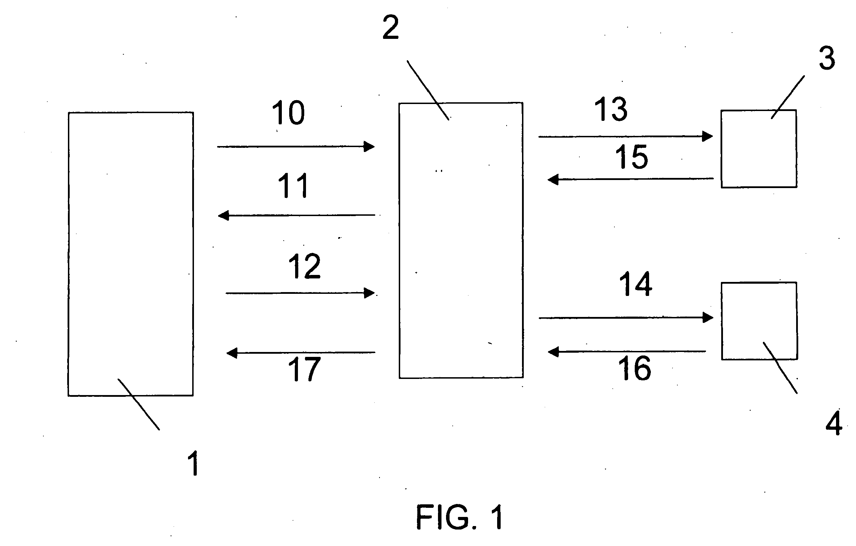

Illustré FIG. 1, on décrit la manière dont un utilisateur émetteur associé à un équipement mobile 1 peut transmettre une photo à une pluralité de destinataires, respectivement associés à des équipements mobiles 3 et 4.

L'équipement émetteur 1 envoie 10 la photo vers un serveur 2 via un service MMS, acronyme anglais pour « multimedia messaging service », signifiant service de messagerie multimedia. Pour réaliser cet envoi, l'équipement émetteur 1 peut composer un numéro court spécifique permettant la redirection du message MMS vers le serveur 2. Ce numéro court est par exemple attribué par l'opérateur mobile de l'équipement émetteur 1.

Le serveur 2 stocke la photo et l'identifie par une identifiant unique.

Le serveur 2 envoie ensuite 11 à l'équipement émetteur 1, un message SMS, acronyme anglais pour «short message service » signifiant service de messages succincts. Ce SMS comprend un lien cliquable qui pointe vers un générateur de pages visibles par l'équipement émetteur 1. Ce lien possède un identifiant unique.

Lorsque l'équipement émetteur 1 a reçu le SMS, l'utilisateur associé à l'équipement émetteur 1 peut cliquer sur le lien. L'équipement mobile 1 est alors configuré, de façon connue en soi, pour se connecter 12 sur le serveur 2. Ceci est par exemple réalisé par le lancement d'un navigateur wap, et le transfert d'une requête du type wap push, connue en soi vers le serveur 2. Le serveur 2 reçoit alors une demande de connexion et l'identifiant unique du lien. Il génère alors une page visible par l'équipement mobile 1.

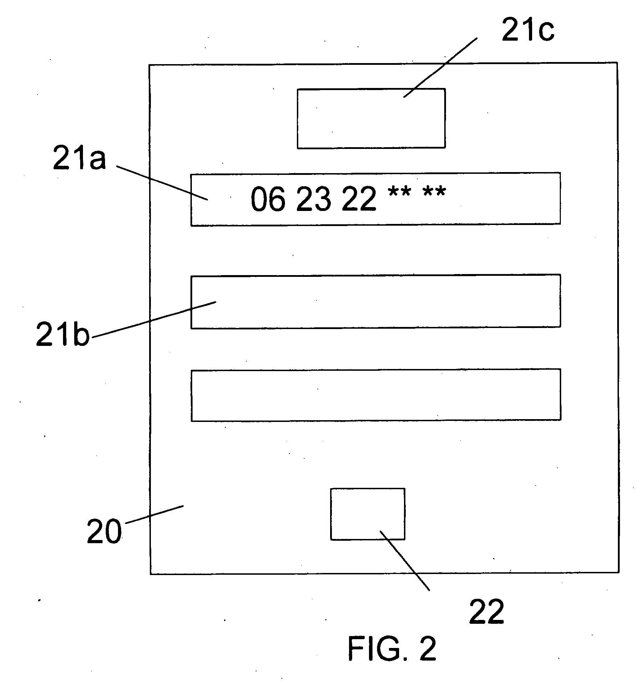

La page visible 20 comprend plusieurs zones de saisie 21a, 21b du type formulaire comme illustré FIG. 2.

Dans la page visible 20, l'utilisateur associé à l'équipement mobile 1 est invité à saisir les numéros de téléphone des destinataires de la photo.

L'utilisateur saisit donc ces numéros de téléphone dans les zones de saisie 21 a et 21 b. Une zone cliquable 22 de la page visible 20 permet à l'utilisateur de valider les numéros saisis et de transmettre les données saisies vers le serveur 2.

Le serveur 2 reçoit les données saisies et stocke les numéros de téléphone saisis dans une base de données.

Le serveur 2 envoie alors 13, 14, à chacun des équipements destinataires 3, 4, un SMS contenant un lien cliquable qui pointe sur le générateur de pages du serveur 2. Le lien comprend notamment un identifiant unique permettant d'identifier l'équipement mobile 1 et la photo.

Lorsque l'utilisateur destinataire associé à l'équipement mobile 3 clique sur le lien, l'équipement mobile 3 se connecte 15 au serveur 2. Ceci est par exemple réalisé par le lancement d'un navigateur wap, et le transfert d'une requête du type wap push, connue en soi vers le serveur 2. Grâce à l'identifiant contenu dans le lien, le serveur 2 génère une page visible par l'équipement mobile 3.

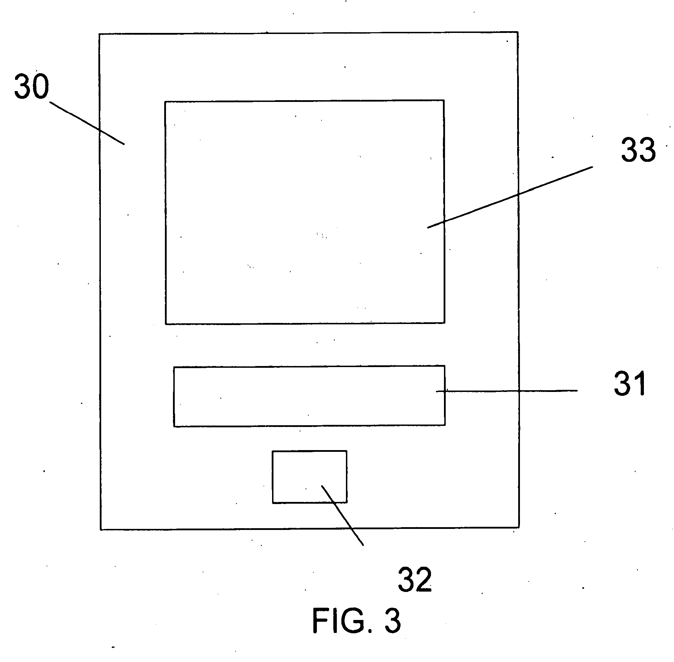

Cette page visible 30 est illustrée FIG. 3. Elle comprend la photo 33, éventuellement une liste de commentaires, et une zone de saisie 31 adaptée pour recevoir des commentaires. L'utilisateur associé à l'équipement mobile 3 peut donc saisir des commentaires sur la photo 33 dans la zone de saisie 31.

Si l'utilisateur associé à l'équipement mobile 4 clique également sur le lien reçu par SMS, il obtient la même page visible 30 en se connectant 16 au serveur 2.

Une fois la photo 33 visualisée par les utilisateurs des équipements 3 et/ou 4, et dans commentaires éventuellement ajoutés dans la zone de saisie 31, les utilisateurs des équipements 3 et/ou 4 peuvent cliquer sur une zone cliquable d'envoi 32. Le serveur 2 reçoit alors les commentaires saisis par l'intermédiaire des équipement 3 et/ou 4.

Le serveur 2 envoie 17 un nouveau SMS vers l'équipement émetteur 1. Ce SMS contient un lien cliquable qui pointe sur le générateur de pages du serveur 2. Ce lien comprend un identifiant unique permettant d'identifier l'utilisateur de l'équipement mobile 1, la photo, et tous les commentaires saisis dans la page visible.

L'utilisateur associé à l'équipement mobile 1 peut alors cliquer sur le lien de sorte à visualiser une page visible comprenant la photo et la liste des commentaires saisis éventuellement par l'intermédiaire des équipements 3 et/ou 4.

Dans la nouvelle page visible, l'utilisateur est à nouveau invité à saisir ses commentaires.

On décrit maintenant des variantes du mode de réalisation précédemment décrit.

Le procédé a été décrit en référence à l'envoi d'une photo dans le MMS initial transmis de l'équipement 1 vers le serveur 2. Il est toutefois entendu que plusieurs photos peuvent être transmises dans ce MMS. Plus généralement, tout contenu peut être transmis depuis l'équipement 1 vers le serveur 2. Un contenu audiovisuel adapté au format des messages MMS est préférable.

En outre, on a décrit un mode de réalisation dans lequel un SMS comprenant un lien cliquable est transmis dans l'étape 13 aux destinataires 3 et 4, en réponse à la saisie, par l'utilisateur de l'équipement émetteur 1, des numéros de téléphones des destinataires. Toutefois, il est possible de programmer le serveur 2 de sorte à retarder l'envoi de tels SMS, notamment pour optimiser le nombre de SMS envoyés.

En outre, nous avons décrit le fait qu'une notification est envoyée dans l'étape 17, à l'équipement 1 de l'émetteur, de sorte à lui signaler la visualisation et/ou l'ajout de commentaires pour sa photo. Il est également possible que cette notification soit également transmise en outre aux autres numéros de la liste définie par l'utilisateur de l'équipement émetteur 1. Dans l'exemple décrit ci-dessus, si l'équipement 3 se connecte au serveur 2 et visualise la photo, une notification pourra également être envoyée vers l'équipement 4.

Par ailleurs, nous avons décrit une étape dans laquelle l'utilisateur émetteur associé à l'équipement 1 saisit la liste des numéros de téléphone des destinataires. Lors de la deuxième mise en oeuvre du procédé selon l'invention, il est également possible qu'une liste prédéfinie des numéros de téléphone des destinataires soit présentée à l'utilisateur émetteur. Le serveur 2 est alors agencé pour présenter, dans la page 20, une liste de numéros prédéfinis. L'utilisateur émetteur a toutefois la possibilité d'ajouter des nouveaux numéros à cette liste prédéfinie par l'intermédiaire des zones de saisie 21a et 21b. Le serveur 2 comprend donc une base de données qui stocke, pour un identifiant de photo et un équipement émetteur 1 donnés, la liste des numéros de téléphone des destinataires.

L'actualisation de la liste des numéros de téléphone peut par exemple être mise en oeuvre par une interface spécifique, à tout moment, et non nécessairement une fois qu'une photo a été transmise au serveur 2.

Par ailleurs, afin de pouvoir fournir la photo a l'ensemble du public et non à des destinataires particuliers, selon l'invention, la page de sélection des destinataires 20 peut comprendre un champ spécial 21 c. Lorsque ce champ spécial 21c est activé par l'utilisateur, la liste des destinataires comprend l'adresse d'un serveur de diffusion de type blog. Une page accessible par le réseau internet est alors construite au niveau de ce serveur de diffusion. Cette page comprend, comme pour la page 30 précédemment définie, la photo 33 et une zone de saisie de commentaire 31. Le public peut alors consulter la photo par l'intermédiaire de cette page. Selon ce mode de réalisation, le serveur de diffusion permettant l'accès public à la page de contenu 30 est donc un destinataire particulier, comme les équipements 3 et 4.

En outre, lorsque, dans le cadre de l'invention, des requêtes sont émises par les équipements 1, 3 ou 4 vers le serveur 2, le serveur 2 peut détecter un identifiant des équipements mobiles 1, 3 ou 4, par exemple un identifiant MSISDN, de sorte à identifier les caractéristiques des équipements. Les pages visibles 20 et 30 peuvent alors être adaptées aux capacités d'affichage des équipements mobiles 1, 3 ou 4. Le format de ces pages, par exemple le format WAP peut donc être différent selon le type d'équipement mobile utilisé.

## Revendications

1. Procédé pour transmettre un contenu depuis un équipement mobile d'émission (1) d'un émetteur vers au moins un équipement de réception (3, 4) associé à un destinataire respectif, **caractérisé en ce qu'**il comprend des étapes dans lesquelles :
• Ledit équipement mobile d'émission (1) transmet (10) ledit contenu à un serveur de stockage (2);
• Ledit serveur de stockage (2) stocke ledit contenu en lui associant un identifiant de contenu ;
• Ledit serveur de stockage construit une page de contenu (30) comprenant ledit contenu (33), ladite page de contenu (30) étant associée à une première adresse, ladite première adresse étant fonction au moins dudit identifiant de contenu ;
• Ledit serveur de stockage (2) transmet (11) audit équipement mobile d'émission (1), en réponse à la réception dudit contenu, un premier message comprenant une deuxième adresse associée à une page de sélection de destinataires (20);
• Ledit équipement mobile d'émission (1) accède (12) à ladite page de sélection de destinataires (20) par l'intermédiaire de ladite deuxième adresse;
• Ledit émetteur construit, par l'intermédiaire de ladite page de sélection de destinataires (20), une liste comprenant un identifiant dudit équipement de réception (3, 4);
• Ledit serveur (2) transmet (13, 14), vers ledit équipement de réception (3, 4), un deuxième message comprenant au moins ladite première adresse ;
• Ledit destinataire accède (15, 16) à ladite page de contenu (30) par l'intermédiaire de ladite première adresse.

2. Procédé selon la revendication 1 dans lequel ledit équipement mobile (1) transmet ledit contenu au serveur de stockage (2) dans un message MMS, et ledit serveur de stockage (2) transmet audit équipement mobile d'émission (1) ledit premier message dans un message SMS comprenant ladite deuxième adresse sous la forme d'un premier lien wap push, et ledit équipement d'émission (1) accède à ladite page de sélection de destinataire (20) en activant ledit premier lien wap push, de sorte à ouvrir un navigateur wap de l'équipement d'émission (1).

3. Procédé selon l'une des revendications 1 ou 2 dans lequel ledit serveur (2) transmet, vers ledit équipement de réception (3,4) le deuxième message dans un message SMS comprenant ladite deuxième adresse sous la forme d'un deuxième lien wap push et équipement de réception (3, 4) accède à ladite page de contenu (30) à l'aide de ladite deuxième adresse en activant ledit deuxième lien wap push, de sorte à ouvrir un navigateur wap de l'équipement de réception (3,4).

## Claims

1. Method for transmitting a content from a mobile transmitting equipment (1) of an emitter to at least one receiving equipment (3, 4) associated with a respective recipient, **characterised in that** it comprises steps wherein:
- Said mobile transmitting equipment (1) transmits (10) said content to a storage server (2);
- Said storage server (2) stores said content by associating to it a content identifier;
- Said storage server builds a page of content (30) comprising said content (33), said page of content (30) being associated to a first address, said first address according to at least said content identifier;
- Said storage server (2) transmits (11) to said mobile transmitting equipment (1) a first message comprising a second address, in response to the reception of said content, associated with a selection page of recipients (20);
- Said mobile transmitting equipment (1) accesses (12) said selection page of recipients (20) by the intermediary of said second address;
- Said emitter builds, by the intermediary of said selection page of recipients (20) a list comprising an identifier of said receiving equipment (3, 4);
- Said server (2) transmits (13, 14), to said receiving equipment (3, 4), a second message comprising at least said first address;
- Said recipient accesses (15, 16) said page of content (30) by the intermediary of said first address.

2. Method according to claim 1 wherein said mobile equipment (1) transmits said content to the storage server (2) in an MMS message, and said storage server (2) transmits to said mobile transmitting equipment (1) said first message in an SMS message comprising said second address in the form of a first wap push link, and said transmitting equipment (1) accesses said selection page of recipients (20) by activating said first wap push link, in such a way as to open a wap browser of the transmitting equipment (1).

3. Method according to one of claims 1 or 2 wherein said server (2) transmits, to said receiving equipment (3, 4), the second message in an SMS message comprising said second address in the form of a second wap push link and receiving equipment (3, 4) accesses said page of content (30) using said second address by activating said second wap push link, in such a way as to open a wap browser of the receiving equipment (3, 4).

## Patentansprüche

1. Verfahren zum Übertragen eines Inhalts von einer mobilen Sendeeinrichtung (1) eines Absenders an mindestens eine Empfangseinrichtung (3, 4), die mit einem jeweiligen Adressaten verknüpft ist, **dadurch gekennzeichnet, dass** es die Schritte umfasst, in denen:
- die mobile Sendeeinrichtung (1) den Inhalt an einen Speicherserver (2) überträgt (10);
- der Speicherserver (2) den Inhalt speichert, indem er damit einen Inhaltsidentifizierer verknüpft;
- der Speicherserver eine Inhaltsseite (30) erstellt, die den Inhalt (33) umfasst, wobei die Inhaltsseite (30) mit einer ersten Adresse verknüpft ist, wobei die erste Adresse mindestens von dem Inhaltsidentifizierer abhängig ist;
- der Speicherserver (2) an die mobile Sendeeinrichtung (1) als Antwort auf den Empfang des Inhalts eine erste Nachricht überträgt (11), die eine zweite Adresse umfasst, die mit einer Adressatenauswahlseite (20) verknüpft ist;
- die mobile Sendeeinrichtung (1) auf die Adressatemauswahlseite (20) über die zweite Adresse zugreift (12);
- der Sender über die Adressatenauswahlseite (20) eine Liste erstellt, die einen Identifizierer der Empfangseinrichtung (3, 4) umfasst;
- der Server (2) an die Empfangseinrichtung (3, 4) eine zweite Nachricht überträgt (13, 14), die mindestens die erste Adresse umfasst;
- der Adressat auf die Inhaltsseite (30) über die erste Adresse zugreift (15, 16).

2. Verfahren nach Anspruch 1, wobei die mobile Einrichtung (1) den Inhalt an den Speicherserver (2) in einer MMS-Nachricht überträgt, und der Speicherserver (2) an die mobile Sendeeinrichtung (1) die erste Nachricht in einer SMS-Nachricht überträgt, welche die zweite Adresse als einen ersten Wap-Push-Link umfasst, und die Sendeeinrichtung (1) auf die Adressatenauswahlseite (20) zugreift, indem sie den ersten Wap-Push-Link aktiviert, um einen Wap-Navigator der Sendeeinrichtung (1) zu öffnen.

3. Verfahren nach einem der Ansprüche 1 oder 2, wobei der Server (2) an die Empfangseinrichtung (3, 4) die zweite Nachricht in einer SMS-Nachricht überträgt, welche die zweite Adresse als zweiten Wap-Push-Link umfasst, und die Empfangseinrichtung (3, 4) auf die Inhaltsseite (30) anhand der zweiten Adresse zugreift, indem sie den zweiten Wap-Push-Link aktiviert, um einen Wap-Navigator der Empfangseinrichtung (3, 4) zu öffnen.
